# EUROPEAN PATENT APPLICATION

(11) **EP 2 378 466 A1**
(43) Date of publication of application: **19.10.2011**
(21) Application number: 09832033.6
(22) Date of filing: 21.09.2009
(51) Int. Cl.: G06K 17/00

(54) **LOCATION DETECTION SYSTEM USING AN RFID TAG**

(30) Priority: 11.12.2008 KR 20080126017
(71) Applicant: Lee, Sang-Sun, Seoul 120-090 (KR)
(72) Inventor: Lee, Sang-Sun, Seoul 120-090 (KR)
(74) Representative: Hano, Christian
(86) International application number: PCT/KR2009/005349
(87) International publication number: WO 2010/067947

(57) **Abstract**

Provided is a U-safety (Ubiquitous-safety) service using RFID. Unlike conventional systems using RFID which are locally used in one apartment complex, theme park, or the like due to spatial restrictions, the system of the present invention enables RFID readers having a wide range of recognition to be located everywhere all along the street to receive location information via said RFID readers and to transmit the location information together with prestored messages to an operating server in accordance with the RFID clicking frequency via another RFID reader installed in a portable phone, thus informing the guardian of the user of the safety of the user via the messages. Additionally, the guardian may frequently confirm the information on the location of the user via the operating server, and can be directly connected to a social safety network upon the occurrence of an emergency to deal with the emergency in a quick manner. Further, the user of the portable phone may input characters and send desired character messages to inform the guardian of the safety of the user.

## Description

### [Technical Field]

The present invention relates to a ubiquitous-safety (U-safety) service using a RFID (Radio Frequency Identification) tag to thus transmit location information of a user in any places, and more particularly, to a location detection system and method that acquires tag information of a RFID tag to then determine current location of the tag information, and adds a message to the tag information to then transmit message added tag information.

### [Background Art]

A currently available RFID system is obtained by incorporating radio frequencies of an electromagnetic spectrum with an electromagnetic and electrostatic coupling technology, in order to identify objects, animals or persons, and is a technology with which bar codes can be replaced to thus be gradually increasingly used in industry. The RFID system includes an antenna, reader called a tag reader, and a tag called a transponder. The antenna reader uses a RF (Radio Frequency) radio wave in order to transfer a signal for activating a tag. Accordingly, if the tag is activated, data that the tag has is transmitted to the antenna reader. There are various types of processing methods for the RFID system, from a simple method of processing gate passage to a complex method of processing transactions of sales linked to a database.

The RFID systems have been used in various kinds of fields. For example, a RFID system has been used in a field of determining and tracking position of children, seniors, and pets. Korean Laid-open Patent publication No. 2003-0029968 discloses a system for determining user's position. The conventional system disclosed in the Korean Laid-open Patent publication No. 2003-0029968 determines where users who use facilities such as ski resorts are currently located and grasps which facilities they use, to thereby calculate fees. The system restricts a space of use into internal space of the facilities that the users use, to thereby cause it difficult to be applied for a system for locating children, seniors, or pets, and find it difficult to cope in the event of an emergency situation.

Besides, a conventional system that detects spatial position of a moving target using a RFID tag in a WLAN (Wireless Local Area Network) network, transmits the detected position using a SMS (Short Message Service) server, uploads a RFID detection device on a wireless AP (Access Point), and transmits the detected position to an operating server via the WLAN network, to thus enable the position of the moving target to be identified and to thereby extend a possible area of the position identification. However, this conventional system is poor in the case of detecting position of children or animals since they move randomly. In addition, the conventional system receives only position information that is sent in a one-way direction. Accordingly, although parents continuously identify the position of the children even in the event of an emergency situation such as kidnapping and accident, it could not be realized whether or not the emergency situation has occurred. As a result, the parents could not take any action. That is, even though a kidnapping event has taken place, the state of emergency such as the kidnapping event cannot be realized with only simple position information. As a result, no action could be immediately taken to solve the state of emergency such as the kidnapping event.

### [Disclosure]

### [Technical Problem]

To solve the above problems or defects that a conventional location detection system using a RFID (Radio Frequency Identification) tag identifies only a simple position and further restricts a possible area of position identification, to thus have no means for sending an emergency situation signal in the event that an emergency situation has occurred, it is an object of the present invention to provide a location detection system using a RFID tag that can cover a wider location detection service area and guarantee safety in conjunction with a social safety net.

### [Technical Solution]

To accomplish the above and other objects of the present invention, there is provided a system for detecting user's location using a RFID (Radio Frequency IDentification) tag, the user's location detection system comprising:
a RFID tag that identifies unique identification information;
a RFID reader that wirelessly receives the identification information of the RFID tag; and
an operating server that is connected to the RFID reader, by wire or wirelessly, to thus receive the unique identification information of the RFID tag and location information thereof by the RFID reader and to then transmit the location information to a contact point that is stored in a database (DB).

Preferably but not necessarily, the RFID tag further comprises a click unit, wherein the RFID reader detects the number of clicks of the RFID tag and transmits the detected number of clicks to the operating server together with the unique identification information and location information, and wherein the operating server transfers the location information and a message depending upon the location information to a protector or guardian, according to a preset scenario that is determined by the detected number of clicks of the RFID tag.

Preferably but not necessarily, the scenario further comprises informing a social safety net such as police stations, fire stations, security companies, and municipal offices of an emergency situation.

Preferably but not necessarily, the RFID reader comprises a mobile RFID reader mounted on a user's mobile phone and a street RFID reader that is installed on a street to transmit the location information of the street to the operating server, and the street RFID reader receives the unique identification information of the RFID tag and transmits the received unique identification information to the operating server together with the location information and the mobile RFID reader authenticates the unique identification information of the RFID tag of the user's mobile phone to then add a prestored message or a user input safety situation message according to the number of clicks to the unique identification information and location information and to thus transmit the prestored message or user input safety situation message added unique identification information and location information to the operating server via a mobile telecommunication network, when the RFID tag has been clicked.

Preferably but not necessarily, the operating server comprises: a user database (DB) containing contacts according to user's scenarios and user's unique identification information; a user hourly position database (DB) containing a user hourly position history; and a log database (DB) containing log records in order to modify contents of the scenarios.

Preferably but not necessarily, the RFID tag comprises a guardian RFID tag, a ward RFID tag, and a non-classified RFID tag, and wherein the ward RFID tag is configured to transmit location information of the ward to a guardian when the ward RFID tag has been depressed, the guardian RFID tag is configured to receive a text message or location information of a tagged ward when a safety menu that is contained in a mobile phone or hone server is clicked, and the non-classified RFID tag is configured to transmit location information of the non-classified RFID tag to all users of a group when the non-classified RFID tag has been depressed by one of the users designated into the group.

Preferably but not necessarily, an event that a user motion path or motion coverage secedes from a prestored motion path or coverage is immediately informed for the guardian of the ward.

### [Advantageous Effects]

Therefore, a user's location detection system according to the present invention enables a guardian to monitor location of a ward on a ubiquitous manner and to deal with an emergency situation in a quick manner.

### [Description of Drawings]

FIG. 1 is a configurational diagram showing a user's location detection system according to the present invention.
FIG. 2 is a block diagram showing an operating server applied in the present invention.
FIG. 3 is a flowchart view showing a processing sequence of the present invention.

### [Best Mode]

The above and/or other objects and/or advantages of the present invention will become more apparent by the following description.

Hereinbelow, a user's location detection system according to an embodiment of the present invention will be described with reference to the accompanying drawings in detail. A service provided by a user's location detection system according to the present invention enables users to communicate covertly with each other, in the case of confronting a dangerous situation such as kidnapping, abduction, bullies, robbers, and freaks during making social activities in their lives, to thereby enable users to be relieved from anxiety and take an immediate action for an emergency situation and to thus enable users to live more peaceful and comfortable lives. In other words, the user's location detection system according to the present invention enables a protector to detect location of a ward through a RFID tag via a mobile telecommunication network, to thereby communicate with each other between the protector and the ward and simultaneously allow emergency communication between the protector and the ward.

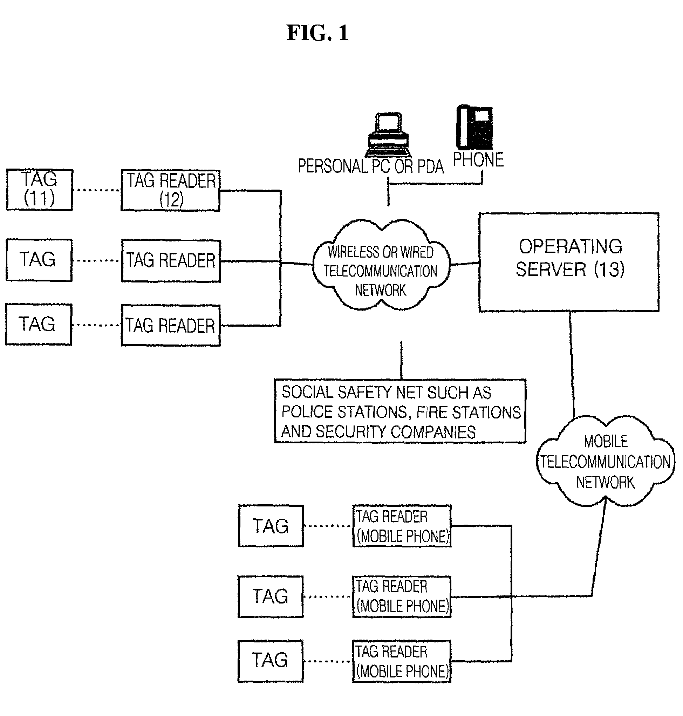

FIG. 1 is a configurational diagram showing a user's location detection system according to an embodiment of the present invention, as an example of using a RFID reader 12 called a tag reader by respective users. The RFID reader 12 is configured to be inexpensive and recognize a RFID tag even at a distance of about 25m or more by recent technological development. When the RFID readers are installed at a distance of about 50m (=25*2) from each other over densely populated areas such as residential areas and shopping areas and near school zones, assuming that each RFID reader 12 is configured to recognize the RFID tag at a distance of about 25m, too many RFID readers are not required. If RFID readers having wider recognition coverage are installed, the number of RFID readers that are required for installation can be reduced drastically. Accordingly, if the RFID readers are installed in a region, RFID tag signals can be received anywhere in the region. The RFID tag signals can be transmitted to an operating server 13 via a wireless or wired telecommunication network.

In addition, if a RFID reader is mounted in a mobile phone even though there is an area having no RFID readers, user current location information can be transmitted via a mobile telecommunication network of a mobile phone even in the area having no RFID readers. Here, the current location information can be separately received by the mobile phone using GPS (Global Positioning System). In addition, a lot of wireless internet communications called Wi-Fi (Wireless Fidelity) communications are widely used, and a lot of APs (Access Points) are installed for wireless internet communications. Further, many devices that play a role of APs are widely used. Accordingly, if a RFID reader function is added in the respective devices playing a role of APs in the case that separate RFID readers are not installed, a double investment due to a double installation can be prevented and an easy access can be easily performed.

As shown in FIG. 1, tag information contained in RFID tags 11 can be transmitted to an operating server 13 via RFID readers 12 that are installed at a predetermined distance from each other in residential areas, downtowns, and so on. The operating server 13 makes information of a corresponding RFID tag match information of a user database (DB) that is connected with the operating server 13, and transmits the current location information of a holder of the RFID tag to a mobile phone of a corresponding mobile phone number via a mobile telecommunication network using a recipient mobile phone number, an IP (Internet Protocol) address, a general phone number, or an internet URL (Universal Resources Locator) that is prestored in the user database (DB). The recipient mobile phone number may be a phone number of a mobile terminal such as a mobile phone or a personal digital assistant (PDA) of a protector of the RFID tag holder. In addition, the operating server 13 may receive a prestored guidance message together with the current location information of the holder of the RFID tag and transmit a safety situation message that has been made up on the mobile phone in the case of a non-emergency situation, to the mobile phone of the prestored mobile phone number.

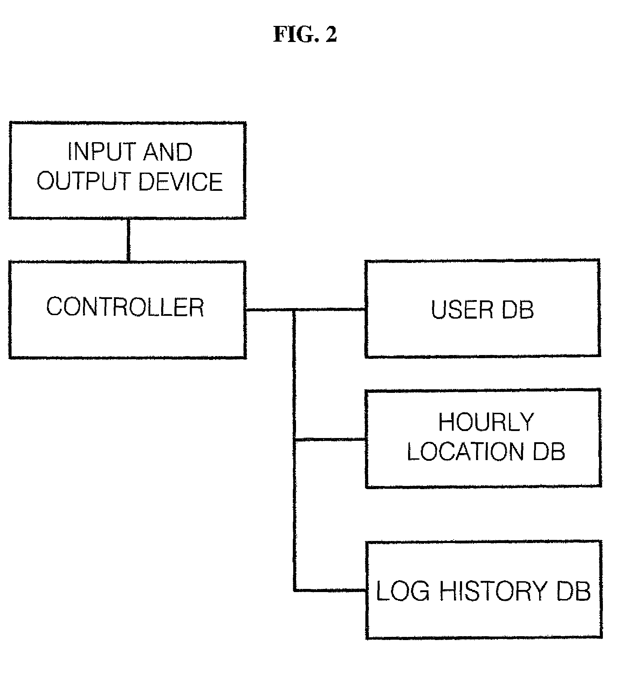

In addition, as shown in FIG. 2, the operating server 13 can continue to store a user moving history in a hourly location database (DB) separated from the user database (DB). The user moving history can be confirmed when a user gains access to the hourly location database (DB) via a communication network such as the internet network. Referring back to FIG. 1, when a RFID tag is clicked once, the current location information of the RFID tag can be immediately transmitted to a user such as a ward or a protector of the ward. The operating server can be accessed by a personal computer (PC) equivalent unit such as a home server or PDA, to thereby make it for a protector possible to immediately confirm current location of a ward. Even in the case that such a personal computer (PC) equivalent unit such as a home server or PDA is not available, the present and past location information of the ward can be confirmed by a phone call.

In addition, when the current location of a user is not on a path (or an area) that the user should move, such a situation may be immediately notified for a protector or guardian. To this end, the protector or guardian may prestore a path or area along which a user should move.

In addition, the operating server 13 may be connected to a social safety net such as police stations, fire stations, security companies, and municipal offices via the internet network or a telephone network, to thus directly report an emergency situation.

For this purpose, the RFID tags 11 according to this invention are configured to transmit signals that respective users intend to transmit as well as simple location identification signals for the users. This may be implemented by checking how many times the RFID tags 11 are depressed and presetting actions that are made to take according to the number of the depressing times, to then make the actions happen.

For example, in the case that a RFID tag 11 is depressed once or twice, a preset safety situation text or a message such as a statement of "I'll go there at three o'clock." that a user inputs using a mobile phone can be transmitted to a preset user or a protector, together with location information on where the user is located.

Further, in the case that the RFID tag 11 is depressed three or four times, the user can designate usage of the RFID location detection system. In this case, a current situation is not an emergency situation, but an attention message asking careful attention about user's location can be transmitted. That is, the user can define a function of the RFID location detection system to perform a set (defined/protocol-based) function, between users such as group members, friends, lovers, patients, doctors, mentees and mentors.

In addition, in the case that the RFID tag 11 is depressed five times or more, or lengthily above four seconds, a message representing that a current situation is a dangerous or urgent situation cannot only be transmitted to a protector but also notified to a social safety net such as a preset user, a police station, a social worker, a doctor, and a security company, to then specify a helper to cope with the dangerous or urgent situation. For example, in the case that an elder who lives alone suddenly falls, the RFID tag 11 is configured to make him or her depress the RFID tag 11 several times in order to inform a protector of a dangerous situation if he or she is still conscious. Otherwise, the RFID tag 11 is configured to make an elder who lives along depress the RFID tag 11 once at a predetermined time. Here, in the case that the RFID tag 11 is not depressed, the operating server 13 notifies a social worker that the RFID tag 11 is not continuously depressed, to then make the social worker visit the elder. In addition, in the case of a person to be supervised under probation such as a senior, a patient or a ward who does not use or depress a tag for a predetermined period (for example for one day or 24 hours), the operating server 13 is configured to transmit a helper or social worker of necessary or relevant information to thus avoid the person to be supervised from being left alone.

The number of the number of the depressing times and duration of the depressing action can vary according to importance of a defined event, that is, depending on the circumstances. In an emergency situation, the RFID tag can be depressed a little more number of times or continuously for example for four seconds or longer. Since it is difficult to count the number of depressing times of the RFID tag in the emergency situation, setting the duration of the depressing action is better than setting the number of the depressing times. In addition, the RFID tag can be fabricated and used in various forms. In other words, the RFID tag is manufactured to be linked into various rings, to be attached to the waist, to be used as a purse or card pattern, or to be designed into various models such as a button shape. It is better that the RFID tag is located at a place where it can be touched immediately in an emergency situation. Further, since the RFID tag can be depressed once or twice without consciousness, it is better that only location information can be transmitted at one or two depressing times.

In addition, a RFID reader function can be added in a mobile phone. Although an emergency notification function is available in an existing mobile phone, it is difficult to take out the mobile phone from a pocket or bag and to activate it. As a result, the mobile phone may not be operated in time at a moment it is really dangerous. Thus, if such a RFID reader function is added in a mobile phone and a RFID tag that is attached to the waist is continuously depressed in an emergency situation, the emergency situation can be easily notified without taking out the mobile phone.

Further, since distance between the RFID reader attached on the mobile phone and the RFID tag is short, in the case that a RFID reader function can be added in a mobile phone, the RFID reader has few possibilities causing malfunction. Besides, the RFID reader can be configured to receive any emergency signals that are transmitted when the RFID tag has been depressed a number of times or continuously and transfer them to the operating server, irrespective of whose emergency signals, instead of recognizing the user of the activated RFID tag in the RFID reader of the mobile phone and thus blocking signals coming from neighboring tags.

For example, in the case that a child who returns home depresses a RFID tag once or twice, a RFID reader mounted in a mobile phones receives the tag depressing signal and authenticates whether or not the child is an authorized user. If the child is an authorized user, a prestored safety situation message that has been preset in the mobile phone or a user input safety situation message that is input by the user is transmitted to another user, that is, a protector or guardian, via a mobile telecommunication network, together with the situation information of the user. Here, the mobile phone moves continuously along with the user. Thus, if a GPS (Global Positioning Service) unit is mounted in the mobile phone, the location information of the mobile phone that has been grasped by the GPS unit is also transmitted to the protector. The operating server incorporates the location information that has been input from other neighboring RFID readers that have been attached on a street and the information that has been input to the operating server via the mobile telecommunication network, and sends the incorporated information to a preset user such as a parent or protector. Thus, the parent or protector can receive the location information of the ward together with the safety situation message.

In addition, the parent or protector sends a text message to the operating server via the mobile phone or the Internet network, in order to ask where a child or ward comes back home at the time of using a safety confirmation menu. Here, the text message can be transmitted to a mobile phone of the parent or protector. Simultaneously, the mobile phone of the parent or protector can request the mobile phone of the child or ward to send current location to the mobile phone of the parent or protector.

The location information of the child can be transmitted to all members of a preset group not a single parent or protector. All the members in the preset group can communicate with each other with data along with the location information.

A code system of the RFID tag can be configured as follows. For example a code can be configured into a 10-digit code in which an initial place is 'd0' and the last place is 'd9', that is 'd9d8d7d6d5d4d3d2d1d0'. The d0 is a reserved digit or a digit representing a country code, d1 and d2 are digits for large municipal district office centers, d3 and d4 are digits for medium municipal district office centers, d5 and d6 are digits for small municipal district office centers, d7 and d8 are position indicating digits for RFID readers that have been preset in the large, medium and small municipal district office centers, and d9 is a digit that is used for representing who the user is in the preset group. In other words, when a RFID signal is received by the RFID reader, the location of the RFID reader can be grasped with the d1 to d8 digits. It can be also seen who is positioned at a corresponding location by indication of a member that has been transmitted from the RFID tag to the RFID reader. In other words, the d1 to d8 digits are determined by the RFID reader, and the d9 digit is determined by the RFID tag. That is, it is determined by the d9 digit who sent the signal. In the case that the above code is sent together with a phone number, it can be a unique number that identifies whose phone number is. In the case that the above code is recognized by only the RFID reader without using a mobile phone, the number of digits is increased to add a digit representing a user ID (IDentification) number to recognize a user. The user ID (IDentification) number can be a mobile phone number of a user's mobile phone. The above example is nothing but an exemplary embodiment, and the user ID (IDentification) number and the location information can be implemented in various forms.

The operating server 13 stores information and contact points regarding persons such as parents or social workers who should be gained access through phone numbers or unique numbers or ID numbers, in a user database (DB), and designates the stored information and contact points by a predetermined class, respectively. If the received information corresponds to the corresponding class, the operating server 13 can gain access to an internet communication device corresponding to the preset information and contact points. Here, in the case that new contents are registered or the stored contents such as the information and contact points are corrected, it is inhibited to register new contents or correct old contents except a designated place or person, to accordingly fundamentally block an information registration or correction possibility by a third party. In inquiry, no one can inquire information from the user database (DB) except authorized and authenticated persons. In the case that a log-in action is performed to correct the user database (DB), a corresponding log record should be analyzed and backed up for a followup to thus prevent the information and contact points stored in the user database (DB) from being used for committing a crime. The location information detection system according to the present invention that is constructed as described above can be connected to a social safety net such as police stations, fire stations, welfare organizations, security companies, and municipal offices, and provides additional services based on user types such as persons who are relied upon a social security system or who require observation such as the disabled, the elder, dementia patients, and the emergency patients.

In addition, the RFID readers should be installed in obligation in public places. In particular, the RFID readers can be concentratively installed in school zones or crime-ridden districts. Further, the RFID readers should be installed compulsorily within several meters distance around kindergartens or schools. Therefore, the location information should be notified for the parents or protectors in the case of homes or offices, the teachers or directors in the case of kindergartens or schools, security officers, management officers in the case of apartment houses, and global centers or local securities in the case of crime-ridden districts. In addition, the location information can be applied for finding lost children or missing persons in the case of disasters or accidents.

FIG. 2 is a block diagram showing an operating server applied in the present invention. The operating server includes a user database (DB), a hourly location database (DB), and a log history database (DB). A controller contained in the operating server stores various kinds of information in the corresponding databases (DBs) through an input and output device from a manager. Subscriber's personal information and contact point information regarding various situations at the time of clicking tags is stored in the user database (DB). The hourly location information of users is continuously stored in the hourly location database (DB), to thus enable the hourly location information of users to be identified for further reference.

Since the location information of the users is stored depending on the user's movements in the hourly location database (DB), the hourly location database (DB) is activated when a user clicked a tag to thereby enable corresponding location information to be transmitted to a preset user such as a parent or a protector via the operating server. In the case that the tag is not clicked, the location information can be stored in the hourly location database (DB).

The location information or inquiry contents of a computer that has been logged in for inquiring or correcting user information is stored in the log history database (DB), to thus prevent the stored information from being changed, added or corrected carelessly.

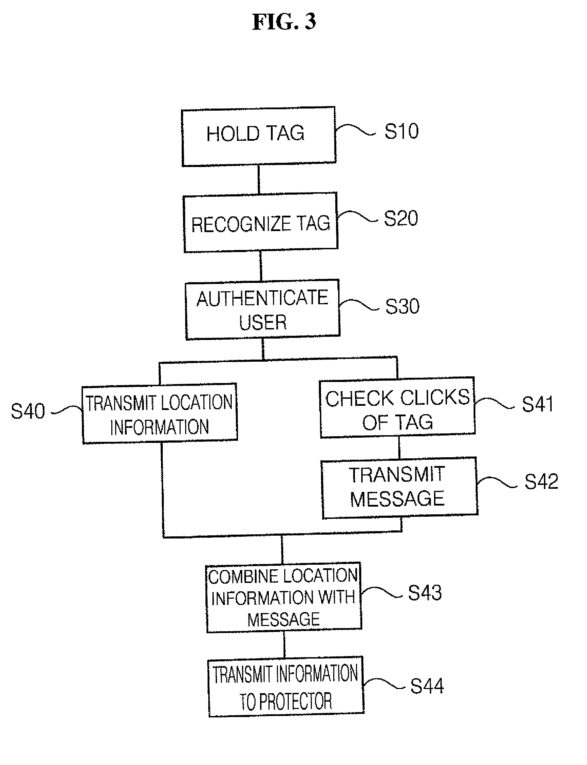

FIG. 3 is a flowchart view showing a processing sequence of the present invention. A user who has been subscribed in a service according to the present invention holds a RFID tag (S10). If the RFID tag is recognized through RFID readers that have been installed on streets (S20), the RFID readers authenticate whether a user is an authorized user through the user's unique identification information of the user's RFID tag (S30), for example, depending on the number of clicks of the tag. If the user has been authenticated as an authorized user, the location information of the RFID reader is transmitted to the operating server together with the unique identification information of the user's RFID tag (S40), or a code containing information on how many times the RFID tag has been depressed is transmitted to the operating server (S41). Then, the operating server refers to the user database (DB) and finds out contact point information according to the number of clicks of the tag, to thus transmit a message containing the location information to the corresponding contact point (S42). In addition, a preset text message can be transmitted to the operating server together with the location information or the message containing the location information.

In addition, when a RFID tag is depressed, the tag information can be transmitted to the operating server by a RFID reader mounted on a mobile phone as well as a RFID reader installed on a street via a mobile telecommunication network. In this case, the operating server compares the location information that has been received though the RFID reader installed on the street with the information that has been received though the RFID reader installed on the mobile phone, to thereby check the number of the clicks of the tag (S41). Here, in the case that the number of clicks of the tag differs from each other, the number of the clicks of the tag that has been received from the mobile phone can prioritize since the RFID reader mounted on the mobile phone is closer to the RFID tag than the RFID reader installed on the street. Otherwise, the location information detection system according to the present invention may be configured so that the number of clicks of the tag is checked by only the mobile RFID reader and only the location information of the tag is recognized by the street RFID reader. In addition, the location information that has been received from the street RFID reader is combined with a safety situation text that has been from the mobile RFID reader (S43), to then transmit the safety situation text added location information to another user such as a parent or protector, or members in a preset group (S44). The RFID tag includes a guardian RFID tag, a ward RFID tag, and a non-classified RFID tag. Here, the ward RFID tag is configured to transmit location information of the ward to a protector or guardian when the ward RFID tag has been depressed, the guardian RFID tag is configured to receive location information of a ward when the guardian RFID tag has been depressed, and the non-classified RFID tag is configured to transmit location information of the non-classified RFID tag to all users of a group when the non-classified RFID tag has been depressed by one of the users designated into the group. In addition, in the case that a user wishes to obtain the location information of another user in a group, he or she may inquire the hourly location database (DB) of the current location information through the operating server. Otherwise, a message can be sent to a mobile phone of a user whose location information is desired through the operating server, to then make him or her depress the tag once more.

The RFID tag that is applied in the present invention may be implemented to continuously operate so that the location information of the RFID tag can be automatically recognized without depressing the RFID tag. Here, an action that a user depresses the RFID tag is nothing but a confirmation that nothing happens in the user.

As described above, the present invention has been described with respect to particularly preferred embodiments. However, the present invention is not limited to the above embodiments, and it is possible for one who has an ordinary skill in the art to make various modifications and variations, without departing off the spirit of the present invention. Thus, the protective scope of the present invention is not defined within the detailed description thereof but is defined by the claims to be described later and the technical spirit of the present invention.

### [Industrial Applicability]

As described above, the present invention can be applied in a location detection system using a RFID tag that can cover a wider location detection service area and guarantee safety in conjunction with a social safety net.

## Claims

1. A system for detecting user's location using a RFID (Radio Frequency IDentification) tag, the user's location detection system comprising:
a RFID tag that identifies unique identification information;
a RFID reader that wirelessly receives the identification information of the RFID tag; and
an operating server that is connected to the RFID reader, by wire or wirelessly, to thus receive the unique identification information of the RFID tag and location information thereof by the RFID reader and to then transmit the location information to a contact point that is stored in a database (DB).

2. The user's location detection system according to claim 1, wherein the RFID tag further comprises a click unit, wherein the RFID reader detects the number of clicks of the RFID tag and transmits the detected number of clicks to the operating server together with the unique identification information and location information, and wherein the operating server transfers the location information and a message depending upon the location information to a guardian user, according to a preset scenario that is determined by the detected number of clicks of the RFID tag.

3. The user's location detection system according to claim 2, wherein the scenario further comprises informing a social safety net such as police stations, fire stations, security companies, and municipal offices of an emergency situation.

4. The user's location detection system according to claim 2, wherein the RFID reader comprises a mobile RFID reader mounted on a user's mobile phone and a street RFID reader that is installed on a street to transmit the location information of the street to the operating server, and wherein the street RFID reader receives the unique identification information of the RFID tag and transmits the received unique identification information to the operating server together with the location information and the mobile RFID reader authenticates the unique identification information of the RFID tag of the user's mobile phone to then add a safety situation message according to the number of clicks to the unique identification information and location information and to thus transmit the safety situation message added unique identification information and location information to the operating server via a mobile telecommunication network, when the RFID tag has been clicked.

5. The user's location detection system according to claim 2, wherein the operating server comprises:
a user database (DB) containing contacts according to user's scenarios and user's unique identification information;
a user hourly position database (DB) containing a user hourly position history; and
a log database (DB) containing log records in order to modify contents of the scenarios.

6. The user's location detection system according to claim 5, wherein the RFID tag comprises a guardian RFID tag, a ward RFID tag, and a non-classified RFID tag, and wherein the ward RFID tag is configured to transmit location information of the ward to a protector or guardian when the ward RFID tag has been depressed, the guardian RFID tag is configured to receive location information of a ward when the guardian RFID tag has been depressed, and the non-classified RFID tag is configured to transmit location information of the non-classified RFID tag to all users of a group when the non-classified RFID tag has been depressed by one of the users designated into the group.

7. The user's location detection system according to claim 5, wherein an event that a user motion path or motion coverage secedes from a prestored motion path or coverage is immediately informed for the guardian of the ward.
